## Europäisches Patentamt
## European Patent Office
## Office européen des brevets

(19)

(11) Publication number: **0 125 120 B1**

(12) **EUROPEAN PATENT SPECIFICATION**

(45) Date of publication of patent specification: **27.09.89**

(51) Int. Cl.⁴: **B 29 C 63/00,** B 27 D 1/00

(21) Application number: **84303026.3**

(22) Date of filing: **04.05.84**

(54) **Apparatus for the Application of Surfacing Material on Surfaces in the Area of Edges or Corners of Support Elements.**

(30) Priority: **09.05.83 ZA 833280**
**06.07.83 ZA 834929**
**16.09.83 ZA 836887**

(43) Date of publication of application:
**14.11.84 Bulletin 84/46**

(45) Publication of the grant of the patent:
**27.09.89 Bulletin 89/39**

(84) Designated Contracting States:
**AT BE CH DE FR GB IT LI LU NL SE**

(56) References cited:
**DE-A-1 528 104**
**DE-A-2 528 292**
**FR-A-2 275 288**
**GB-A- 886 648**
**GB-A-1 014 596**
**GB-A-1 057 344**
**US-A-2 542 860**
**US-A-2 739 637**
**US-A-2 937 689**
**US-A-3 009 201**
**US-A-3 028 275**
**US-A-4 035 224**
**US-A-4 334 947**

(73) Proprietor: **Heinrich Brandt Maschinenbau GmbH**
**D-4920 Lemgo (DE)**

(72) Inventor: **Henderson, P. M.**
**10 Beech Road**
**Bedfordview Transvaal Procince (ZA)**
Inventor: **Schmitt, K. H.**
**122 Pretoria Road Rynfield**
**Benoni Transvaal Province (ZA)**

(74) Representative: **Hoffmann, Klaus, Dr. rer. nat. et al**
**Hoffmann . Eitle & Partner Patentanwälte**
**Postfach 81 04 20 Arabellastrasse 4**
**D-8000 München 81 (DE)**

Courier Press, Leamington Spa, England.

## Description

The invention relates to an apparatus for the application of surfacing material on surfaces in the area of edges or corners of support elements, comprising a support frame, a retainer device for the support element to maintain the latter in a predetermined position, an applicator bar which is hinged on the support frame and is equipped with an application apparatus, the application bar being capable of being heated and extending over the length of the retainer device and being arranged to press the surfacing material on the surface of the support element which is held in the apparatus, a device for producing a transverse movement of the applicator bar when this is in contact with the surface material, wherein this device comprises two lateral supports which are arranged in the area of the ends of the applicator bar and which are pivotably mounted around a common axis which is disposed approximately in the area of the surfaces to be covered with the surfacing material on the support frame and between which a support beam extends, which supports the application apparatus.

Apparatus of this kind are known for example from DE-A-2 528 292. With such apparatus, numerous different surfacing materials can be applied to the surfaces of support elements, for example doors, desk tops or other pannels, with the object of providing a pleasing and durable appearance. In particular, without detracting from the scope of this invention, the application of hard, hardwaring, attractive plastic sheets to the outer surfaces of such supporting elements, for example made of composition board or chip board, blockboard or the like, is highly desirable.

In other instances where the surfacing sheet is simply selected to provide am aesthetically pleasing appearance, such is in the case of wood veneers, heat-activated adhesives are often pre-applied to the surfacing material, so that they can be secured to the surfacing material with the aid of heat and pressure. In some other cases heat is not even necessary.

It is the object of this invention to provide an apparatus which will enable the above-described operation, independently of whether or not heating is required, to be carried out more effectively and in a manner in which the surfacing material is applied more positively to the surface of a support element around a usually, but not necessarily radiused corner or edge.

This object is solved according to the invention in that between the lateral supports a further support beam extends on which a retainer device, which extends transversely to the pressing direction of the applicator bar and is disposed to the side of the retainer device is hinged at one of its ends, which supports with its other free end the applicator bar.

On the basis of the arrangement according to the invention with application in the region of edges or corners, the surfacing material is not only pressed against the support elements by the applicator bar, but, in a taut state is actually pulled onto the surfaces or pulled around the corners or edges, whereby even with a difficult to use surfacing material a structure free of hollow spaces and with this a perfect quality results. This qualitatively perfect result is even then achieved when the surfacing material has to be applied in the region of corners and edges onto various radii or curvatures. Adjustments to the apparatus are not necessary due to the arrangement according to the invention.

The retainer apparatus can in principle be formed in different ways. Thus the retainer apparatus can be designed as a plate, on the free longitudinal edge of which the applicator bar is hinged securely. However, the retainer apparatus can consist of a number of arms which are disposed spaced over the length of the applicator bar, on the free ends of which the applicator bar is hinged securely.

To ensure free movement of the applicator bar, it is advantageous that the application apparatus is secured hinged against the applicator bar. Preferably, the application apparatus consists of a number of pneumatic or hydraulic cylinders, which are secured to be pivotable and are spaced next to each other on the support beam.

It is sufficient with the vast majority of uses that the applicator bar is essentially formed as a flat plate.

In principle, the retainer apparatus for the supporting elements can be formed in various ways. According to a further advantageous development, the retainer device consists of a table and a clamp assembly which interacts with this table.

To make the apparatus suitable to support elements of different strengths as well as to the various edge-or corner forms, it is advantageous that the table can be moved vertically.

For long square-or beam-shaped support elements, it is of advantage if the retainer device is formed by a pair of oppositely disposed rotatable mounted assemblies, between which the support beam is retained.

Where there is a danger that the surfacing material can be susceptible to damage of any sort, as a result of lateral sliding of the applicator bar thereon, a usually heat conductive protective sheet may be interposed between the applicator bar and the surfacing material. Sensitive surfacing material, such as veneer, may require this type of protection. In the case of application of such a protective sheet material it is of advantage that a holder is provided for a protective sheet material on the support frame. It is further useful in such cases that on the lateral supports guide rollers for the guiding of the protective sheet material are disposed in association with the application bar.

In all cases the motion of the applicator bar provided by apparatus of this invention relative to the surface material is one in which the applicator bar tends to pull and smooth the surface sheet in a taut condition onto the surface with a sliding

2

motion. In some cases the edges of the support element to be surfaced may be sharp (e.g. where the veneer is employed as a surface material), but generally it will be radiused.

The invention will be described in the following according to embodiments thereof with reference to the accompanying drawings, in which:

Fig. 1 is an isometric schematic view of the apparatus according to this invention,

Fig. 2 is a schematic end elevation thereof,

Fig. 3 is a schematic end elevation shown only the applicator bar and its mounting arrangement with a second position thereof being illustrated in dotted lines,

Figs. 4 and 5 are similar to Figs. 2 and 3, respectively, but illustrating an added feature,

Figs. 6 and 7 illustrate, in a schematic end view, a particular variation of the use of the apparatus,

Fig. 8 is a schematic front elevation of the apparatus having rotatable mounts for a column or the like, and

Fig. 9 is a sectional view taking along line IX-IX in Fig. 8.

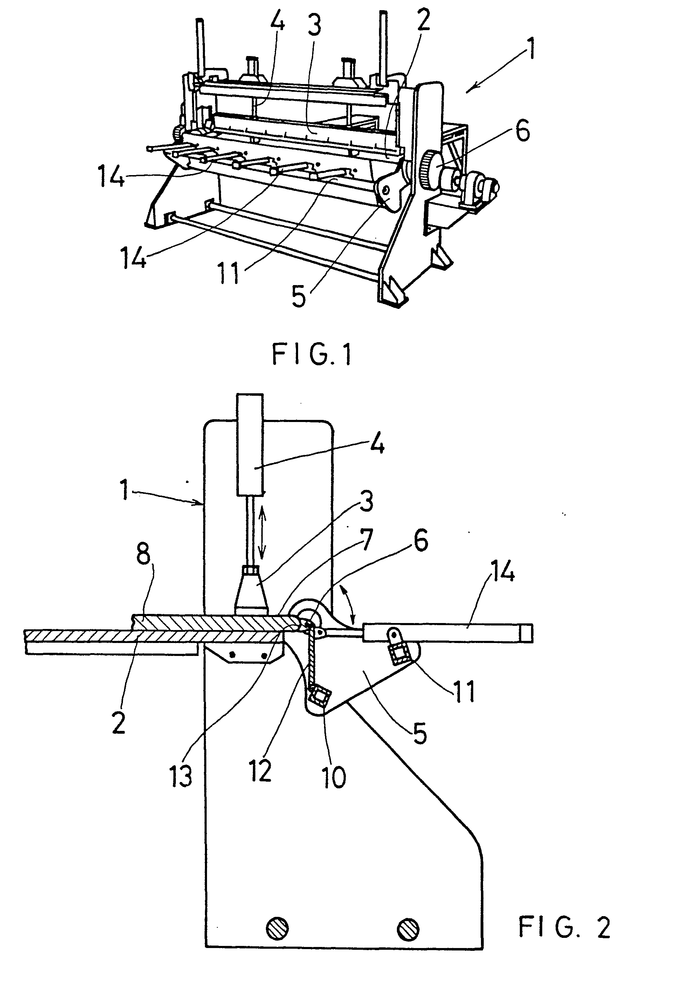

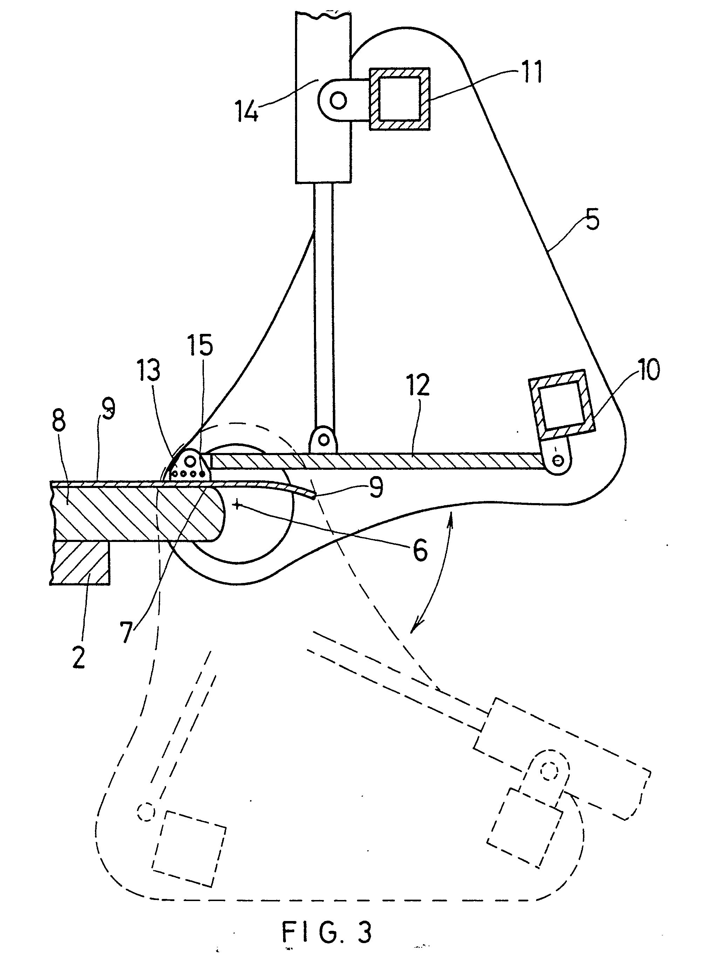

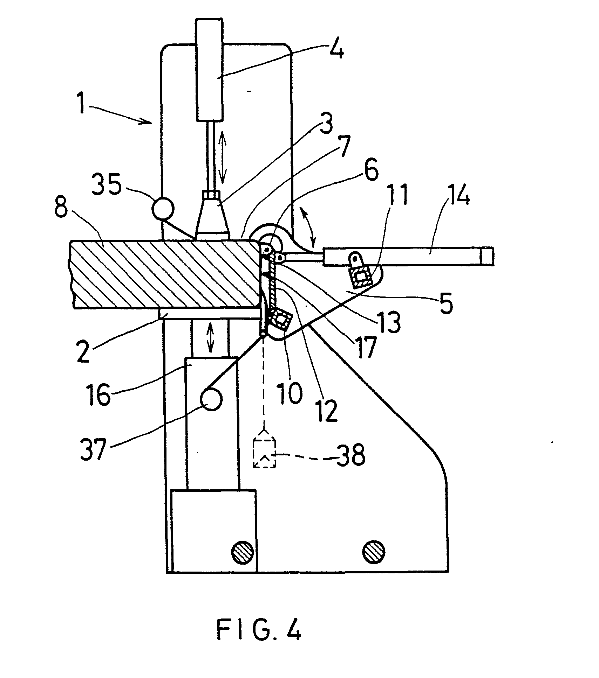

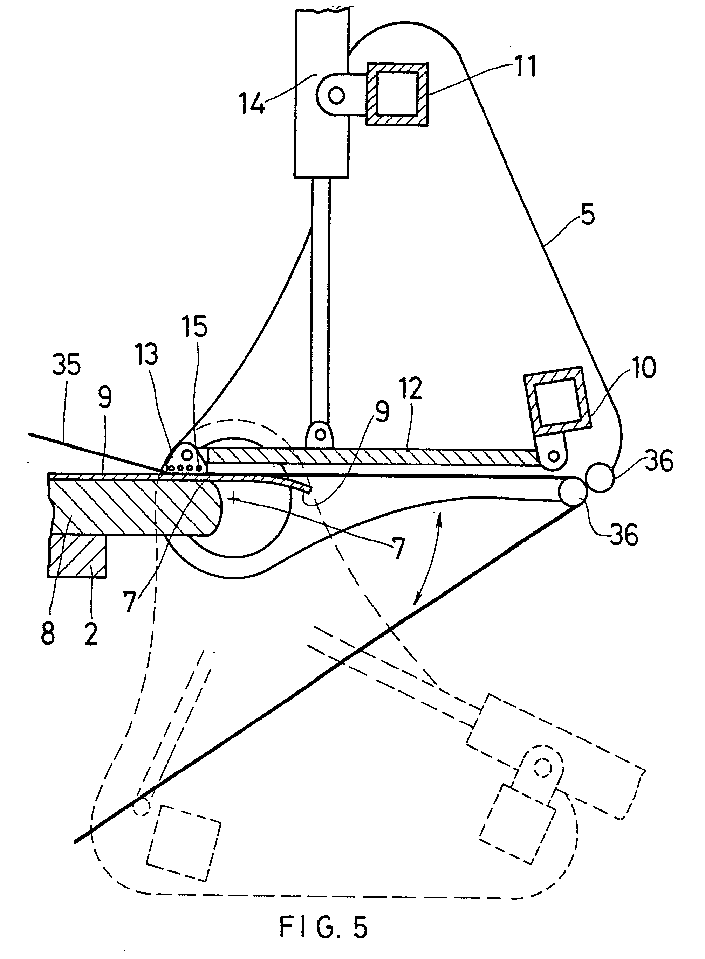

In the embodiment of the invention illustrated in Figures 1 to 5 (Figures 4 and 5 merely include modifications) the apparatus comprises a support frame 1 which supports a table 2 and cooperating clamping device 3 for clamping support elements 8, for example in the form of panels or doors to the table. The clamp device 3 is preferably operated by a plurality of spaced pneumatic cylinders 4. A pair of lateral supports 5 are rotatable about an axis 6 which is located, in operation, in the vicinity of the corner 7 of a projecting end of a support element 8 that is to be covered with a sheet material 9. The corner edge of the supporting element 8 is radiused, as indicated above, but by using the apparatus of this invention, the radius of curvature can be as little 8mm for the surfacing material, whereas with the same surfacing material as has been used hereto for the radius of curvature amounted to a minimum of 16mm.

The lateral supports 5 carry between them a pair longitudinally extending support beams 10 and 11, one of which is angularly offset from the other relative to the axis of rotation of the lateral support. The one support beam 10 has pivotally attached thereto a retainer apparatus 12 which is conveniently in the form of a solid metal plate which extends inwardly towards a region in which the projecting edge of the supporting element 8 is situated. This assembly 12 carries at its free end a hingedly mounted, substantially flat applicator bar 13 extending along the length of the apparatus. An application apparatus 14 is mounted to the other support beam 11, which is orientated such that a row of pneumatic cylinders 14 can be employed for urging the free ends of the retainer device, and thus the applicator bar 13, towards a projecting end of the surfacing element 8.

The applicator bar is, in this embodiment of the invention, provided with a resistance heating element 15 therein so that its temperature can be controlled to a temperature at which the surfacing materials are not damaged but are, nevertheless when rendered sufficently pliable to bend them around a radius end of the supporting elements. This contact heat is highly desirable as provides extremely advantageous results.

The apparatus illustrated in Figures 1 to 3 and 4 and 5 are substantially identical but, in the embodiment of Figures 4 and 5, the table 2 is mounted to the upper end of a pair of supporting cylinders 16, which can be either hydraulic or pneumatic as may be required. The table 2 may be adjusted in height and the clamping device 3 operates against the cylinders 16. Thus, by increasing the pressure in the cylinders 16, which support the table, the whole clamp arrangement and the supporting element 8 can be moved upwardly and downwardly relative to the applicator bar 13. This arrangement has a tremendous advantage where extremely thick panels or other arrangements having a high front face are to be surfaced using the surfacing materials under consideration.

In use, the surfacing material, such a chipboard door, for example, is firstly provided with radius edges by means of suitable cutter in known manner. Generally, the two major longitudinal edges of a door would be covered with a sheet of facing material as well as least the other major face thereof.

In order to form a door of this nature a sheet of known incompletely cured thermo-setting resin surfacing material is bonded to the major surface of the door and the surfacing sheet is allowed to project beyond the edge 7 of the door.

With the surfacing material in this condition the door or panel is clamped to the table of the apparatus with the edge of the door projecting over the table edge but substantially panel thereto.

Generally speaking, the above arrangement would be such that the surfacing material would be uppermost and, in such a case, the lateral supports for the applicator bar are located in a position in which the applicator bar can be engaged properly with the surfacing material and the applicator bar lies immediately adjacent to the radiust edge of the door or panel.

The pneumatic cylinder 16 associated with the applicator bar are activated and the applicator bar is thereby urged against the surfacing material to move it into intimite contact with the surface of the door. The retainer device is sufficently flexible to twist or bend to accommodate misalignment or other non-conformities.

If the lateral supports are then rotated in a direction such that the applicator bar moves away from the major portion of the door itself it will be drawn, whilst engaging the surfacing material, around the edge. This thereby tends to stretch the surface material somewhat towards the projecting edge. As the applicator bar reaches the radiued edge it will continue to urge, by reason of the presence of the pneumatic cylinders, the surfacing material into intimate contact the

radiused edge of the door or panel. Being hingedly mounted, the applicator bar will assume a position in which it contacts the longest outer surface area in the region being treated.

It will be understood that, for surfacing material which requires heat in order for its application to be effective, the resistance heating element in the applicator bar will be activated during the above described process. The process is thus carried out at a speed sufficiently slow to enable adequate heat transfer from the applicator bar to the surfacing material to take place without the surfacing material being over heated. As indicated above, it has been found that by using apparatus according to this invention a smaller radius of curvature can be achieved in the bend of the surfacing material around a radiused edge of a door or panel as well as a full 180° bend arrangement can be produced to fold the surfacing material completely around a projecting radiused edge of a door.

During this process the retainer device which is located basically on the side of pneumatic cylinders opposite the door edge, prevents unwanted lateral movement of the applicator bar.

The movement of the applicator 13 may be controlled further. Thus, adjacent to each of the edges, the applicator bar can be held stationary relative to the surfacing material to ensure that proper adhesion is achieved in the regions immediately adjacent to a radiused part.

The applicator bar cam then be moved around the radiust edge and again held stationary relative to a vertical front face 17 of thick panel (see Figure 4) or the like again immediately adjacent the radiust corner. This ensures that the surfacing material is properly adhered to the panel or the like immediately adjacent to the radiused corners. At this stage, in the case of the embodiment of Figures 4 and 5, the table 2 can be moved upwardly so that the surfacing material is applied to the rather high front face of the patent and, when the applicator bar is adjacent to the lowermost radiused edge, the table may be stopped and lateral support 5 can be further rotated to cause the applicator bar to apply the surfacing material to a lower radiused corner. Again the applicator can be stopped for a predetermined period of time at both sides of the radiust edge to ensure proper adhesion.

The apparatus according to this invention shows a highly desirable effect in that the surfacing material is almost stretched onto the surface of the panel or the like so that no regions of the surfacing material remain out of contact with the surface to which it is bonded.

The contact heating of the sheet material in the areas and zones where the heat is required at any one time has been found to be highly advantageous when compared to the prior art preheating method followed by application.

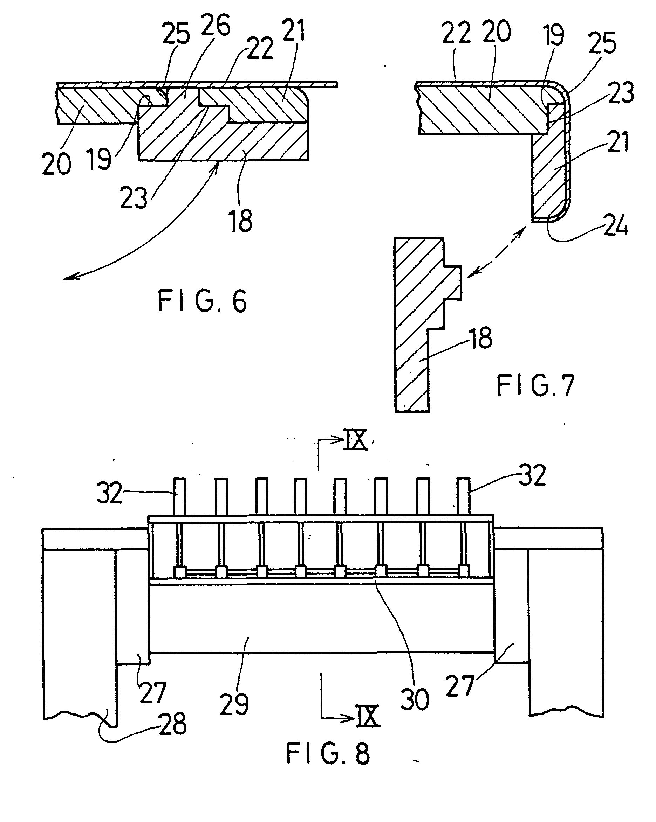

In the following, the variation of the invention shown in Figures 6 and 7 is entered into. The device shown is substantially the same apart from the introduction of a jig member 18 which is shaped to cooperate with a rebated end 19 of a door or desk top panel 20 or the like. An edging strip 21 is located by the jig member 18 in proper spaced relationship relative to the panel 20 and a surfacing material 22 which has been applied to the outer surface of the panel projects over the edging strip 21. The edging strip also has a rebated edge 23 so that, when it is rotated about 90°, it will cooperate properly with the rebated end of the panel. The final position of the edging strip 21 and panel 20 is illustrated in Figure 7.

The outer surfaces of the rebated end and the lower edge 24 of the edging strip are radiused and, after the surfacing period 22 has been secured to the edging strip, the jig member 18 can be swung outwards, being suitably mounted to do this.

The apparatus described above with reference to Figures 1 to 5 can then be used in the normal way and the applicator bar will initially engaged the surface material 22 where it is bonded to the outer surface of the door panel adjacent its radiust edge 25. The jig member 18 defines a space 26 of the surfacing material between the edging strip and the door panel so that this region can become bonded to the radiused edge 25 of the door panel. In its initial position of engagement the applicator bar engages the edge of the door panel and, if it is not too wide, extends over the surfacing material between the door panel and over the part of the surfacing material covering the edging strip. The applicator bar remains in this position for long enough to effect the required heating and bonding of the surfacing material to the edging strip. It then starts to move laterally around the radiused edge of the door.

The edging strip, which has been released in consequence of the jig member moving to an inoperative position, moves into its proper position in which the rebates 19 and 23 cooperate. Suitable adhesive is used, or pre-applied to the cooperating surfaces of the rebates so that the edging strip becomes bonded into its final position as illustrated in Figure 7.

In order to achieve this the vertically movable table 2 can be employed if the height of the edging strip is sufficiently great to warrant it. Otherwise the table can be held stationary whilst the applicator bar heats and applies the surfacing material.

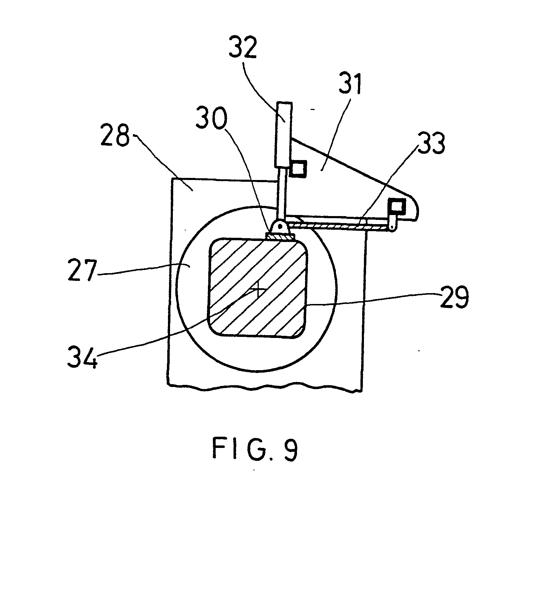

In the event that surfacing material is to be applied to a carrier or beam shaped support element 29, whether it be of circular or non-circular cross-section, the lateral supports need not necessarily be employed. In such a case they could be held stationary, during which the support element is rotated by an arrangement as illustrated in Figures 8 and 9. To this end, the apparatus can comprise a pair of rotatable mounting assemblies 27 supported on the main frame 28 of the apparatus according to the invention. These mounting assemblies can be axially retractable so as to grip a column 29 end-on therebetween. In this case, the applicator bar 30 is again urged towards the surface of a column 29 held by the rotatable mounting assemblies 27.

The lateral supports 31 can be held stationary or, according to an alternative of the invention, can be fixed relative to the main frame 28 of the apparatus.

Pneumatic cylinders 32 are employed for urging the applicator 30 towards the surface of the supporting elements 29. Further, lateral restraining arms 33 are provided, conveniently in the form a plate as outlined above.

If required, and depending on the size range of the beam-shaped supporting elements 29 to be treated by the apparatus, the lateral supports 31 could be made movable in a direction towards and away from the axis 34 of rotation of the rotatable mounting assemblies 27. Alternatively, the axis of the mounting assemblies 27 could be made movable relative to the end supports.

Where the surfacing material is of a nature such that it is susceptible to damage by the sliding action of the applicator bar thereon a protective sheet can be employed to be located between the surfacing material and application bar.

To this end, on the side of the clamping device 3 remote from the lateral supports, and as shown in Figures 4 and 5, a roll of protective sheet material 35 may be provided. The sheet material can be drawn under the clamping device 3 so as to be positioned between the clamping device and the surfacing material 9 being applied.

The protective sheet material 35 is passed between a pair of rollers 36 carried by the lateral supports 5 and extending parallel to the longitudinally extending beams 10 and 11 to which the retainer device is mounted. With this arrangement the protective sheet material 35 extends roughly parallel to the retainer device 12. A protective sheet, which extends from between the rollers 36, is preferably attached to a take-up roller 37 carried by the frame and located beneath the table 2. According to an alternative embodiment, a weight 38 (shown in dotted lines in Figure 4) could be attached to the free end and the weight could be moved along the length of the protective sheet as and when required.

As is apparent, with the protective sheet, which may be Kraft, paper, plastic foil or the like, the outer surface of the surfacing material will not be damaged in any way as the result of the applicator bar being drawn laterally across the surface material. It must be noted that the protective sheet must be sufficiently heat conductive where the applicator bar is of the heated type so as to avoid unnecessary heat losses or inadequately heating of adhesive.

The above described embodiment of the invention can be varied in many ways without departing from the scope of this invention. In particular, the applicator bar, which is in these embodiments of the invention a flat bar, could be replaced by a bar having a right-angled section so that, as the material is folded about the radiust corner of a panel, the two surfaces joined by the corner can be pressed into engagement with the surfaces of the door or panel simultaneously for a short while. This may not be necessary in most cases.

Furthermore, the exact arrangement whereby the applicator bar is mounted to the apparatus can be varied widely and the arrangement described above could be varied in many ways involving only structural changes, but none in principal. The rather multitudinous pneumatic cylinders could be decreased in number or replaced with mechanical or other means, such as a spring arrangement, for example.

## Claims

1. An apparatus for the application of surfacing material on surfaces in the area of edges or corners of support elements, comprising a support frame (1), a retainer device (2, 3) for the support element (8) to maintain the latter in a predetermined position, an applicator bar (13) which is hinged on said support frame (1) and is equipped with an application apparatus (14), said applicator bar (13) being capable of being heated and extending over the length of the retainer device and being arranged to press the surfacing material on the surface of the support element (8) which is held in the apparatus, a device for producing a transverse movement of the applicator bar (13) when this is in contact with the surfacing material, wherein this device comprises two lateral supports (5) which are arranged in the area of the ends of said applicator bar (13) and which are pivotably mounted around a common axis which is disposed approximately in the area of the surfaces to be covered with the surfacing material on the support frame (1) and between which a support beam (11) extends, which supports said application apparatus (14) characterized in that between said lateral supports (5) a further support beam (10) extends on which a retainer apparatus (12) which extends transversely to the pressing direction of said applicator bar (13) and is disposed to the side of the latter is hinged at one of its ends, which supports with its other free end said applicator bar (13).

2. Apparatus as set forth in claim 1 characterized in that said retainer apparatus (12) is designed as a plate, on the free longitudinal edge of which said applicator bar (13) is hingedly secured.

3. Apparatus as set forth in claim 1 characterized in that the retainer apparatus (12) consists of a number of arms which are disposed spaced over the length of the applicator bar (13), on the free ends of which the applicator bar (13) is hingedly secured.

4. Apparatus as set forth in claim 1 characterized in that the application apparatus is secured hinged against the applicator bar (13).

5. Apparatus as set forth in claim 1 characterized in that said applicator bar (13) is designed substantially as a flat plate.

6. Apparatus according to claim 1 characterized in that said application apparatus (14) consists of a number of pneumatic or hydraulic cylinders, which are secured to be pivotable and are spaced next to each other on said support beam (11).

7. Apparatus as set forth in claim 1 characterized in that the retainer device (2, 3) consists of a table (2) and a clamp assembly which interacts with said table (2).

8. Apparatus as set forth in claim 7 characterized in that said table (2) can be moved vertically.

9. Apparatus as set forth in claim 1 characterized in that the retainer device is formed by a pair of oppositely disposed rotatable mounted assemblies (27), between which the support element (29) is retained.

10. Apparatus as set forth in claim 1 characterized in that a holder is provided for a protective sheet material on said support frame (1).

11. Apparatus as set forth in claim 10 characterized in that on the lateral supports (5) guide rollers (36) for the guidance of said protective sheet material (35) are disposed in association with said applicator bar (13).

**Patentansprüche**

1. Vorrichtung zum Aufbringen von Deckfolienmaterial auf Flächen im Bereich von Kanten oder Ecken von Trägereelementen, mit einem Tragrahmen (1), einer Halteeinrichtung (2, 3) für das Trägerelement (8) zur Halterung desselben in einer vorgegebenen Lage, einer an dem Tragrahmen angelenkten und mit einer Andruckvorrichtung (14) ausgestatteten beheizbaren Andruckschiene (13), die sich über die Länge der Halteeinrichtung erstreckt und zum Anpressen des Deckfolienmaterials an die Fläche des in der Vorrichtung gehaltenen Trägerelementes (8) eingerichtet ist, einer Einrichtung zur Erzeugung einer Querbewegung der Andruckschiene (13) während sich diese in Anlage an dem Deckfolienmaterial befindet, wobei diese Einrichtung zwei im Bereich der Enden der Andruckschiene (13) angeordnete seitliche Halterungen (5) umfaßt, die um eine gemeinsame, etwa im Bereich der mit Deckfolienmaterial zu belegenden Flächen liegenden Achse an dem Tragrahmen (1) schwenkbar gelagert sind, und zwischen den sich ein Träger (11) erstreckt, der die Andruckvorrichtung (14) trägt, dadurch gekennzeichnet, daß sich zwischen den seitlichen Halterungen (5) ein weiterer Träger (10) erstreckt, an dem eine sich quer zur Anpreßrichtung der Andruckschiene (13) erstreckende und seitlich von dieser angeordnete Haltevorrichtung (12) mit ihrem einen Ende angelenkt ist, die mit ihrem anderen freien Ende die Andruckschiene (13) trägt.

2. Vorrichtung nach Anspruch 1, dadurch gekennzeichnet, daß die Haltevorrichtung (12) als Platte ausgebildet ist, an deren freien Längsrand die Andruckschiene (13) gelenkig befestigt ist.

3. Vorrichtung nach Anspruch 1, dadurch gekennzeichnet, daß die Haltevorrichtung (12) aus einer Anzahl von im Abstand über die Länge der Andruckschiene (13) angeordneten Armen besteht, an deren freien Enden die Andruckschiene (13) gelenkig befestigt ist.

4. Vorrichtung nach Anspruch 1, dadurch gekennzeichnet, daß die Andruckvorrichtung gelenkig gegenüber der Andruckschiene (13) befestigt ist.

5. Vorrichtung nach Anspruch 1, dadurch gekennzeichnet, daß die Andruckschiene (13) im wesentlichen als flache Platte ausgebildet ist.

6. Vorrichtung nach Anspruch 1, dadurch gekennzeichnet, daß die Andruckvorrichtung (14) aus einer Anzahl von Pneumatik- oder Hydraulikzylindern besteht, die im Abstand nebeneinander an dem Träger (11) schwenkbar befestigt sind.

7. Vorrichtung nach Anspruch 1, dadurch gekennzeichnet, daß die Halteeinrichtung aus einem Tisch (2) und einer mit diesem zusammenwirkenden Klemmvorrichtung (3) besteht.

8. Vorrichtung nach Anspruch 7, dadurch gekennzeichnet, daß der Tisch (2) vertikal bewegbar ist.

9. Vorrichtung nach Anspruch 1, dadurch gekennzeichnet, daß die Halteeinrichtung von einem Paar von einander gegenüberliegenden, drehbaren Halteanordnungen (27) gebildet ist, zwischen denen das Trägerelement (29) gehalten ist.

10. Vorrichtung nach Anspruch 1, dadurch gekennzeichnet, daß ein Halter für eine Schutzfolienrolle am Tragrahmen (1) vorgesehen ist.

11. Vorrichtung nach Anspruch 10, dadurch gekennzeichnet, daß an den seitlichen Halterungen (5) Führungsrollen (36) zum Führen der Schutzfolie (35) in Zuordnung zur Andruckschiene (13) angeordnet sind.

**Revendications**

1. Appareil pour appliquer un matériau de revêtement sur des surfaces situées dans la zone des bords ou des arêtes d'éléments supports, comportant un bâti-support (1), un dispositif de maintien (2, 3) pour l'élément support (8) pour maintenir ce dernier dans une position prédéterminée, un barreau applicateur (13) monté, à charnière, sur ledit bâti-support (1) et équipé d'un appareil d'application (14), ledit barreau applicateur (13) pouvant être chauffé et s'étendant sur la longueur du dispositif de maintien et étant conçu pour presser le matériau de revêtement sur la surface de l'élément support (8) maintenu dans l'appareil, comportant aussi un dispositif pour produire un mouvement transversal du barreau applicateur (13) lorsque celui-ci est en contact avec le matériau de revêtement, étant précisé que ce dispositif comporte deux supports latéraux (5) qui sont disposés dans la zone des extrémités dudit barreau applicateur (13) et qui sont montés de façon a pouvoir pivoter autour d'un axe commun disposé approximativement dans la zone des surfaces à revêtir du matériau de revêtement, sur le bâti-support (1), et entre lesquels s'étend une poutre support (11) qui supporte ledit appareil d'application (14), caractérisé en ce qu'entre lesdits supports latéraux (5) s'étend une autre poutre support (10) sur laquelle un appareil de maintien (12), qui s'étend transversalement à la direction de pressage dudit barreau applicateur (13) et qui est disposé sur le côté de ce dernier, est monté à charnière à l'une de ses extrémités et supporte, par son autre extrémité, libre, ledit barreau applicateur (13).

2. Appareil selon la revendication 1, caractérisé en ce que ledit appareil de maintien (12) est conçu sous forme d'une tôle sur le bord longitudinal libre de laquelle ledit barreau applicateur (13) est fixé à charnière.

3. Appareil selon la revendication 1, caractérisé en ce que l'appareil de maintien (12) est constitué d'un certain nombre de bras qui sont disposés, espacés l'un de l'autre sur la longueur du barreau applicateur (13) et sur les extrémités libres desquels le barreau applicateur (13) est fixé à charnière.

4. Appareil selon la revendication 1, caractérisé en ce que l'appareil d'application est fixé à charnière pour agir sur le barreau applicateur (13).

5. Appareil selon la revendication 1, caractérisé en ce que ledit barreau applicateur (13) a sensiblement la forme d'une tôle plane.

6. Appareil selon la revendication 1, caractérisé en ce que ledit appareil d'application (14) est constitué d'un certain nombre de vérins pneumatiques ou hydrauliques qui sont fixés de façon à pouvoir pivoter et sont espacés près des uns des autres sur ladite poutre support (11).

7. Appareil selon la revendication 1, caractérisé en ce que le dispositif de maintien (2, 3) est constitué d'une table (2) et d'un ensemble de bridage qui collabore avec ladite table (2).

8. Appareil selon la revendication 7, caractérisé en ce que ladite table (2) peut se déplacer verticalement.

9. Appareil selon la revendication 1, caractérisé en ce que le dispositif de maintien est formé par une paire d'ensembles disposés en face l'un de l'autre, montés avec possibilité de rotation et entre lesquels l'élément support (29) est maintenu.

10. Appareil selon la revendication 1, caractérisé en ce qu'un soutien est prévu pour un matériau en feuille de protection sur ledit bâti support (1).

11. Appareil selon la revendication 10, caractérisé en ce que sur les supports latéraux (5) sont disposés des rouleaux de guidage (36) pour guider ledit matériau en feuille de protection (35) en association avec ledit barreau applicateur (13).

EP 0 125 120 B1

FIG.1

FIG. 2

1

FIG. 3

FIG. 4

FIG. 5

FIG. 6

FIG. 7

FIG. 8

FIG. 9